# EUROPÄISCHE PATENTSCHRIFT

(11) **EP 0 332 642 B1**
(45) Veröffentlichungstag und Bekanntmachung des Hinweises auf die Patenterteilung: **31.03.1993**
(21) Anmeldenummer: 87907948.1
(22) Anmeldetag: 13.11.1987
(51) Int. Cl.: H04L 25/04

(54) **VERFAHREN UND SCHALTUNGSANORDNUNG ZUR ADAPTIVEN ENTZERRUNG VON IMPULSSIGNALEN**
PROCESS AND CIRCUIT FOR ADAPTIVE CORRECTION OF PULSED SIGNALS
PROCEDE ET CIRCUIT POUR L'AJUSTEMENT AUTOMATIQUE D'IMPULSIONS

(30) Priorität: 14.11.1986 DE 3638877
(43) Veröffentlichungstag der Anmeldung: 20.09.1989
(73) Patentinhaber: SIEMENS AKTIENGESELLSCHAFT, 80333 München (DE)
(72) Erfinder: HÜLLWEGEN, Josef, D-4791 Altenbeken (DE)
(86) Internationale Anmeldenummer: EP8700707
(87) Internationale Veröffentlichungsnummer: WO8803733

(56) Entgegenhaltungen:
- EP-A- 0 196 549
- DE-A- 3 210 079
- GB-A- 2 016 249
- National Telecommunications Conference, 29 November - 3 December 1981, New-Orleans, US, IEEE (New York, US), H. Takatori et al.: "A new equalizing scheme for digital subscriber loop", pages E.1.5.1 - E.1.5.6

## Beschreibung

Die Erfindung betrifft ein Verfahren zur adaptiven Entzerrung von Impulssignalen, insbesondere von bipolaren Impulssignalen, bei dem ein Impulssignal hinsichtlich seiner Verzerrung analysiert wird und das Analysenergebnis ein variables Entzerrrungsnetzwerk in seinen Übertragungseigenschaften steuert.

Um bei der Übertragung von digitalen Daten sicherzustellen, daß sich die in der Regel kapazitätsbehaftete Übertragungsstrecke nicht auf einen Gleichspannungswert auflädt, werden die digitalen Daten üblicherweise in einem AMI-Code bzw. in Form einer bipolaren (=pseudoternären) Impulsfolge übertragen, bei der der logische Kennzustand 0 durch die Signalspannung 0 und der logische Kennzustand 1 durch eine bei jedem nächsten 1-Bit die Polarität wechselnde Signalspannung + U bzw. - U dargestellt wird. Dabei liegt bei einer abwechselnden Abfolge von logischen 0- und 1-Zuständen in der Impulsfolge eine kleinere Signaländerungs- oder Impulsfolgegeschwindigkeit vor als bei unmittelbar aufeinanderfolgenden logischen 1-Zuständen.

Aufgrund des frequenzabhängigen Übertragungsverhaltens von Übertragungsstrecken werden digitale Impulssignale mit unterschiedlichen Impulsfolgegeschwindigkeiten bei der Übertragung häufig so stark verzerrt, daß man sie am Ende des Übertragungsweges nicht mehr als solche erkennen kann. Zur Regeneration der digitalen Daten müssen die übertragenen digitalen Impulssignale zuerst entzerrt werden, bevor sie einem Impulsformer zugeführt werden. Zur automatischen Entzerrung solcher verzerrter digitaler Impulssignale verwendet man in der Regel einen adaptiven Entzerrer, der seine Entzerrungscharakteristik an das unbekannte und oft variable Übertragungsverhalten der Übertragungstrecke selbsttätig anpaßt. Ein solcher adaptiver Entzerrer besteht im wesentlichen aus dem eigentlichen variablen, einstellbaren Entzerrungsnetzwerk und einer Schaltungsanordnung zur Steuerung des Entzerrungsnetzwerks.

Eine derartige Schaltungsanordnung zur Einstellung des Entzerrungsnetzwerkes eines adaptiven Entzerrers für digitale Impulssignale ist bereits aus der DE-A-29 08 588 bekannt. Sie besteht aus einem Vorverzerrungsfilter, einem Vorzeichenkoinzidenz-Autokorrelator und einem Korrekturschaltkreis zur Sicherung der Regelstabilität. Diese bekannte Schaltungsanordnung hat jedoch den Nachteil, daß sie insbesondere wegen der Verwendung eines Vorzeichenkoinzidenz-Autokorrelators sehr kompliziert aufgebaut ist, so daß sie einerseits störanfällig und andererseits teuer in der Herstellung ist.

Ferner ist aus der EP-A-0 196 549, von der Anmelderin, eine weitere derartige Schaltungsanordnung bekannt, in der das Stellsignal für einen regelbaren Entzerrer aus der Amplitudenverzerrung der digitalen Impulssignale gewonnen wird.

Es ist daher Aufgabe der Erfindung, eine einfache und zuverlässige Möglichkeit zur adaptiven Entzerrung von verzerrten digitalen Impulssignalen mit unterschiedlichen Impulsfolgegeschwindigkeiten, insbesondere für bipolare Signale, anzugeben.

Diese Aufgabe wird ausgehend von einem Verfahren eingangs genannter Art erfindungsgemäß dadurch gelöst, daß zur Analyse des Impulssignals die zeitlichen Flankenabweichungen eines von den am Ausgang des variablen Entzerrungsnetzwerkes auftretenden Impulsen abgeleiteten Signals von einem Referenzsignal festgestellt werden und daß in Abhängigkeit von den festgestellten Flankenabweichungen einzelne Netzwerkteile des variablen Entzerrungsnetzwerkes im Sinne einer Minimierung der Flankenabweichungen zu- bzw. abgeschaltet werden.

Bei der Übertragung digitaler Impulssignale mit wechselnder Impulsfolgegeschwindigkeit, insbesondere bipolarer Signale, über eine Übertragungsstrecke mit frequenzabhängigem Übertragungsverhalten werden die Impulsflanken der digitalen Signale zeitlich unterschiedlich stark relativ zu den Ursprungssignalen verschoben, was auf die ständig wechselnde spektrale Zusammensetzung der Impulssignale zurückzuführen ist.

Die Erfindung beruht auf der Erkenntnis, daß diese unterschiedlich starke Verschiebung der einzelnen Impulsflanken der digitalen Signale ein Maß für den Grad der Verzerrung der digitalen Signale darstellt und somit zur Steuerung des variablen Übertragungsnetzwerkes im Sinne einer Optimierung des Entzerrungsgrades ausgewertet werden kann.

Das erfindunggmäße Verfahren ist insbesondere zur Entzerrung bipolarer Impulssignale gut geeignet. Wie bereits vorstehend beschrieben, können bei bipolaren Impulssignalen Signalsprünge mit stark unterschiedlichen Amplituden auftreten. So können symmetrische bipolare Impulssignale einerseits Signalsprünge mit der Amplitude U und andererseits Signalsprünge mit der Amplitude 2U enthalten. Diese stark unterschiedlichen Signalsprünge vollziehen sich mit einer stark unterschiedlichen Impulsfolge- oder Signaländerungsgeschwindigkeit. Dies hat zur Folge, daß die Impulse von bipolaren Impulssignalen bei der Übertragung über eine Übertragungsstrecke mit frequenzabhängiger Übertragungscharakteristik besonders große zeitliche Flankenabweichungen gegenüber den Ursprungssignalen aufweisen. Diese Flankenabweichungen können aber in einfacher Weise festgestellt und für die Steuerung des variablen Entzerrungsnetzwerkes ausgewertet werden.

Die Steuerung des variablen Entzerrungsnetzwerkes hinsichtlich seiner Übertragungseigenschaften erfolgt bei der Erfindung in einfacher Weise durch Zu- bzw. Abschalten einzelner Netzwerkteile. Diese Art der Steuerung des variablen Entzerrungsnetzwerkes ermöglicht auch die Verwendung einfach aufgebauter und daher preiswerter Entzerrungsnetzwerke.

Bei einer vorteilhaften Weiterbildung der Erfindung werden die festgestellten Flankenabweichungen aufeinanderfolgender Impulse bzw. Impulsfolgen zur Ermittlung einer Flankenabweichungszu- bzw. abnahme miteinander verglichen. Bei einer ermittelten Flankenabweichungszunahme werden dann solange nacheinander Netzwerkteile mit gegenüber ihren Vorgängern jeweils größerer Entzerrungswirkung zugeschaltet, bis sich die daraus resultierende Flankenabweichungsabnahme wieder umkehrt. Es wird dadurch erreicht, daß der Entzerrungsgrad des variablen Entzerrungsnetzwerkes seinen optimalen Wert erreicht.

Die schrittweise Zu- bzw. Abschaltung von Netzwerkteilen wird vorzugsweise von einem getakteten Dualzähler gesteuert, dessen Zählrichtung in Abhängigkeit von der festgestellten Flankenabweichungsänderung umgeschaltet wird.

Das Taktsignal für den Dualzähler kann dabei von einer Taktschaltung erzeugt werden, deren Taktfrequenz in Abhängigkeit von den Zuständen der Zählerausgangssignale des Dualzählers so umschaltbar ist, daß bei den Zählerständen, bei denen die vom Dualzähler gesteuerte Zu- bzw. Abschaltung von Netzwerkteilen nur einen geringen Einfluß auf den Entzerrungsgrad des variablen Entzerrungsnetzwerkes hat, auf eine im Vergleich zu einem Standardzähltakt höhere Taktfrequenz umgeschaltet wird. Damit kann der Zählvorgang beispielsweise bei einem kleinen Zählerstand beschleunigt und bei einem hohen Zählerstand verlangsamt werden.

Um ein Umspringen des Zählers von seinem maximalen Zählerstand zu seinem minimalen Zählerstand oder umgekehrt zu verhindern, kann die Zählrichtung des Dualzählers bei Erreichen seines Maximal- oder Minimalzählerstandes umgeschaltet werden.

Häufig ist es erwünscht, daß der Entzerrungsgrad des variablen Entzerrungsnetzwerkes voreingestellt werden kann. Bei einer hierzu geeigneten Weiterbildung der Erfindung ist die Zu- bzw. Abschaltung von Netzwerkteilen zur Voreinstellung des Entzerrungsgrades des variablen Entzerrungsnetzwerkes in einfacher Weise durch Voreinstellung des Zählerstandes des Dualzählers möglich.

Die Zu-bzw. Abschaltung von Netzwerkteilen erfolgt vorteilhaft durch Halbleiterschalter, da diese in einfacher Weise von den Ausgängen des Dualzählers ansteuerbar sind.

Bei einer vorteilhaften Weiterbildung des erfindungsgemäßen Verfahrens wird für das am Ausgang des variablen Entzerrungsnetzwerkes auftretende Impulssignal vor seiner Analyse eine Impulsformung durchgeführt. Dabei wird das Impulssignal mit einem oberen und/oder unteren Schwellwert verglichen und in Abhängigkeit vom Vergleichsergebnis ein sogenanntes regeneriertes oder neugeformtes Impulssignal erzeugt. Ein bipolares Impulssignal kann aber auch bereits bei der Impulsformung in binäre Daten umgesetzt werden.

Das bei der Analyse des Impulssignals zur Feststellung der Flankenabweichungen abgeleitete Signal und das Referenzsignal werden in einer vorteilhaften Weiterbildung der Erfindung durch Taktgeneratoren (Taktrückgewinnungsschaltungen) erzeugt, die mit dem ersten Impuls eines zu entzerrenden Übertragungsblocks gestartet werden und mit unterschiedlicher Trägheit auf das Impulssignal (nach-)synchronisiert werden.

Zur Feststellung von Flankenabweichungen wird das Impulssignal diesen beiden Taktgeneratoren (Taktrückgewinnungsschaltungen) zugeführt, und deren Ausgangssignale werden auf Übereinstimmung geprüft. Tritt beim Impulssignal eine starke Flankenabweichungsänderung auf, so paßt sich der eine Taktgenerator nahezu ohne Verzögerung der verschobenen Flanke an. Der andere Taktgenerator, der das Referenzsignal liefert, paßt sich dagegen nur mit relativ großer Verzögerung der verschobenen Impulsflanke an. Durch diese Unterschiede kann mit Hilfe einer Koinzidenzschaltung die Flankenabweichung ermittelt werden.

Das die Flankenabweichung anzeigende pulsförmige Signal wird zum Zwecke einer leichteren Auswertung zu einem Gleichspannungssignal aufintegriert, denn dieses kann in einfacher Weise in einen Digitalwert umgesetzt werden.

In einer Weiterbildung der Erfindung erfolgt die Analog/ Digital-Umsetzung durch einen gleichzeitigen Vergleich dieses Gleichspannungssignals mit verschiedenen Referenzspannungen und durch Umsetzung des Vergleichsergebnisses in einen Digitalwert. Diese Art der Analog/Digital-Umsetzung zeichnet sich vor allem durch ihre hohe Umsetzgeschwindigkeit aus. Der jeweilige Digitalwert wird dabei mit jeweils der positiven Flanke eines Übernahmetaktimpulses zunächst in ein erstes Speicherregister und mit der negativen Flanke dann in ein zweites Speicherregister übernommen, mit der positiven Flanke des nächstfolgenden übernahmetaktimpulses wird der nächstfolgende Ditigalwert in das erste Speicherregister geladen und dann werden die Inhalte beider Speicherregister zur Ermittlung einer Flankenabweichungszu- bzw. abnahme miteinander verglichen. Ergibt der Vergleich dann etwa, daß der im ersten Speicherregister enthaltene Digitalwert größer ist als der im zweiten Speicherregister enthaltene Digitalwert, so liegt eine Flankenabweichungszunahme vor. Dieses Vergleichsergebnis sagt aus, daß der Entzerrungsgrad des variablen Entzerrungsnetzwerkes zu klein eingestellt ist und daher erhöht werden muß.

Nach einer anderen Ausbildung der Erfindung wird zur Ermittlung einer Flankenabweichungszu- bzw. abnahme das ein Maß für die Flankenabweichung darstellende Gleichspannungssignal gleichzeitig mit verschiedenen Referenzspannungen verglichen und nur dann ein eine Flankenabweichungszunahme anzeigendes Signal erzeugt, wenn das Gleichspannungssignal irgendeine der Referenzspannungen überschreitet.

Eine Schaltungsanordnung zur Durchführung des vorstehend beschriebenen Verfahrens, mit einer Analyseeinrichtung zur Analyse des Impulssignals hinsichtlich seiner Verzerrung und mit einer Steuereinrichtung zur Steuerung des variablen Entzerrungsnetzwerkes ist in weiterer Ausbildung des Erfindungsgedankens so aufgebaut, daß die Analyseeinrichtung eine Einrichtung zur Feststellung von Flankenabweichungsänderungen und eine Einrichtung zur Ermittlung des Vorzeichens der festgestellten Flankenabweichungsänderung (Zu- bzw. Abnahme) enthält und daß die Steuereinrichtung einen getakteten Dualzähler enthält, dessen Zählrichtung bei einer durch die Analyseeinrichtung ermittelten Flankenabweichungszunahme umgeschaltet wird und dessen Ausgangssignal die Zu- bzw. Abschaltung einzelner Netzwerkteile des variablen Netzwerkes steuert.

Als zu- bzw. abschaltbare Netzwerkteile sind bei einer vorteilhaften Ausführung der erfindungsgemäßen Schaltungsanordnung ohmsche Widerstände vorgesehen, wobei sich die Widerstandswerte zweier benachbarter Widerstände jeweils um den Faktor 2 unterscheiden. Bereits bei einem 8 Bit-Dualzähler kann dann durch Zu- bzw. Abschalten einzelner ohmscher Widerstände der Entzerrungsgrad des variablen Entzerrungsnetzwerkes in einem hinreichend großen Ausmaß verändert werden.

Bei einer vorteilhaften Ausführungsform der Erfindung enthält die Einrichtung zur Ermittlung des Vorzeichens der festgestellten Flankenabweichungsänderung einen nach dem Parallelverfahren arbeitenden Analog/Ditigal-Umsetzer, dessen Ausgänge mit den Eingängen des ersten von zwei in Serie geschalteten Speicherregistern verbunden sind, einen Inverter, der den Übernahmetaktimpuls des ersten Speicherregisters vor Zuführung zum zweiten Speicherregister invertiert, und einen Vergleicher zum Vergleich der Ausgangssignale der beiden Speicherregister.

Bei dieser Einrichtung wird ein die Flankenabweichungsänderung angebendes analoges Gleichspannungssignal in einen Ditigalwert umgesetzt. Dieser Digitalwert wird mit der ansteigenden Taktflanke in das erste Speicherregister und von dort mit der abfallenden Flanke des Übernahmeimpulses in das zweite Speicherregister übernommen. Mit der ansteigenden Flanke des nächsten Übernahmeimpulses wird dann bereits der nächste Digitalwert in das erste Speicherregister übernommen. Noch bevor dieser zweite Digitalwert in das zweite Speicherregister übernommen wird, werden die Inhalte beider Speicherregister miteinander verglichen. Stellt sich dabei heraus, daß der zweite Digitalwert größer ist als der erste, dann liegt eine Flankenabweichungszunahme vor. Dieses Vergleichsergebnis wird dann zur Steuerung des variablen Entzerrungsnetzwerkes, d.h. zur Steuerung der Zu- bzw. Abschaltung einzelner Netzwerkteile im Sinne einer Minimierung der Flankenabweichungen bzw. einer Erhöhung des Entzerrungsgrades des variablen Entzerrungsnetzwerkes, verwendet.

Bei einer anderen Ausführungsform der erfindungsgemäßen Schaltungsanordnung enthält die Einrichtung zur Ermittlung des Vorzeichens der festgestellten Flankenabweichungsänderung eine Reihe parallel betriebener Komparatoren, die ausgangsseitig jeweils unter Zwischenschaltung eines Kondensators über einen Widerstand mit positivem Potential und über einen invertierenden Schmitt-Trigger mit einem Eingang eines disjunktiven Verknüpfungsgliedes verbunden sind, dessen Ausgang mit einem weiteren Schmitt-Trigger verbunden ist.

Bei dieser Einrichtung wird das die festgestellte Flankenabweichungsänderung angebende Gleichspannungssignal gleichzeitig allen Komparatoren zugeführt. An dem Ausgang eines Komparators entsteht nur dann ein Impuls, wenn das Gleichspannungssignal die Referenzspannung des betreffenden Komparators in positiver Richtung überschreitet. Da die Ausgangssignale der Komparatoren durch das disjunktive Verknüpfungsglied miteinander verknüpft sind, entsteht am Ausgang dieses disjunktiven Verknüpfungsgliedes immer dann ein Impuls, wenn von dem Gleichspannungssignal irgendeine der Referenzspannungen der Komparatoren in positiver Richtung überschritten wird. Ein solcher Ausgangsimpuls wird durch den nachgeschalteten Schmitt-Trigger zu einem Rechteckimpuls geformt. Wenn ein solcher Rechteckimpuls am Ausgang dieser Einrichtung auftritt, dann bedeutet dies, daß sich die Flankenabweichung vergrößert hat.

Die Erfindung wird im folgenden anhand der Zeichnung für ein Anwendungsbeispiel und zwei Ausführungsbeispiele näher erläutert. Es zeigen:
- Fig. 1: ein Anwendungsbeispiel eines erfindungsgemäß arbeitenden adaptiven Entzerrers,
- Fig. 2: ein Ausführungsbeispiel des Entzerrers in Blockdarstellung,
- Fig. 3: eine erste Ausführungsform einer im adaptiven Entzerrer enthaltenen Analyseeinrichtung,
- Fig. 4: eine zweite Ausführungsform der Analyseeinrichtung,
- Fig. 5: Signalverläufe zum besseren Verständnis der Arbeitsweise des adaptiven Entzerrers,
- Fig. 6: Taktrückgewinnungsschaltungen in der Analyseeinrichtung und
- Fig. 7: Signalverläufe in den Schaltungen nach Fig. 6.

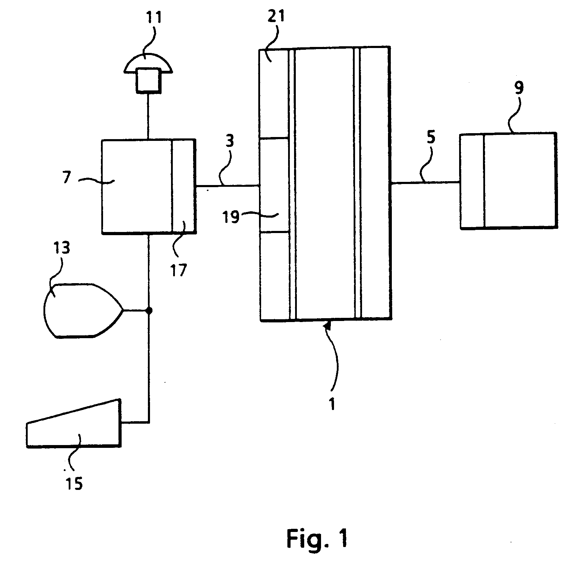

In Fig. 1 ist ein Anwendungsbeispiel des erfindungsgemäßen adaptiven Entzerrers zur Entzerrung leitungsverzerrter digitaler Impulssignale gezeigt. Es ist eine insgesamt mit 1 bezeichnete digitale Fernsprech- und Datenvermittlungsanlage dargestellt, an die über Zweidrahtleitungen 3 und 5 Teilnehmerendgeräte 7 und 9 angeschlossen sind, an denen wiederum eine Fernsprechstelle 11 und ein Datenterminal mit Datensichtgerät 13 und Tastatur 15 betrieben werden können. Die Zweidrahtleitungen 3 bzw. 5 können unterschiedliche Längen, Querschnitte und Kapazität haben. Sie können sich also hinsichtlich ihres ohmschen Widerstandes und ihrer Querkapazität und somit ihres Tiefpaßverhaltens unterscheiden. Die durch das Tiefpaßverhalten der Übertragungsleitungen 3 und 5 bedingten Verzerrungen der übertragenen digitalen Impulssignale werden bei einer Datenübertragung von der digitalen Fernsprech- und Datenvermittlungsanlage 1 zum Teilnehmerendgerät 7 durch einen adaptiven Entzerrer 17 entzerrt. Bei einer Datenübertragung vom Teilnehmerendgerät 7 zur digitalen Fernsprech- und Datenvermittlungsanlage 1 übernimmt diese Aufgabe ein weiterer adaptiver Entzerrer 19. Dieser ist Bestandteil einer digitalen Teilnehmerschaltung 21, welche zwischen der Übertragungsleitung 3 und der eigentlichen Fernsprech- und Datenvermittlungsanlage 1 angeordnet ist. Zwischen dem jeweiligen Teilnehmerendgerät 7 bzw. 9 und der digitalen Fernsprech- und Datenvermittlungsanlage 1 werden über die Zweidrahtleitung 3 bzw. 5 digitale Sprach- und Datenströme mit einer Datenrate von 512 Kilobit pro Sekunde übertragen. Die Datenübertragung erfolgt dabei in Form von Datenblöcken von 20 Bit Länge abwechselnd vom und zum Teilnehmerendgerät 7 bzw. 9.

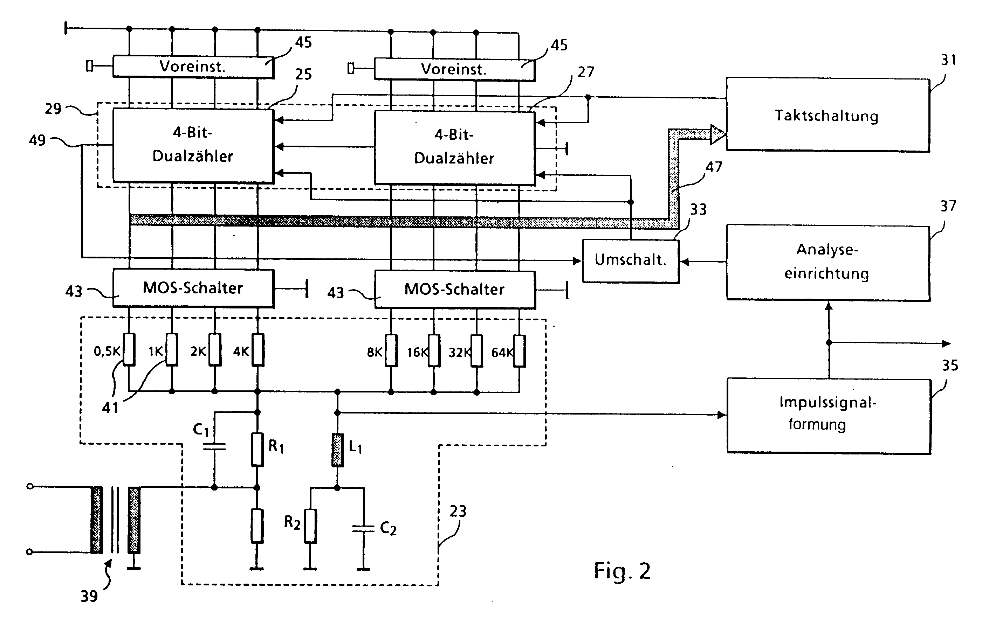

Fig. 2 zeigt einen adaptiven Entzerrer. Er besteht im wesentlichen aus einem einstellbaren Entzerrungsnetzwerk 23, einem aus zwei 4 Bit-Dualzählern 25 und 27 aufgebauten 8 Bit-Dualzähler 29, einer Taktschaltung 31, einer Umschalteinrichtung 33, einer Einheit 35 zur Impulssignalregeneration bzw. einem Impulsformer und einer Analyseeinrichtung 37. Am Eingang des adaptiven Entzerrers ist zur Entkopplung des zu entzerrenden Impulssignals ein Entkopplungstransformator 39 vorgesehen. Ein Anschluß seiner Sekundärwicklung ist mit dem einstellbaren Entzerrungsnetzwerk 23 verbunden. Dieses bildet mit einer R₁-C₁-Parallelschaltung und einer L₁-R₂-C₂-Kombination einen frequenzabhängigen Spannungsteiler, durch den niederfrequente Signalteile stärker gedämpft werden als hochfrequente Signalteile. Parallel zur L₁-R₂-C₂-Kombination ist eine Reihe ohmscher Widerstände 41 vorgesehen, deren Widerstandswerte sich der Reihe nach von links nach rechts jeweils um den Faktor 2 erhöhen. Einzelne der ohmschen Widerstände 41 können über MOS-Halbleiterschalter 43 mit Erdpotential verbunden werden. Angesteuert werden diese MOS-Halbleiterschalter 43 von den Ausgangssignalen des 8 Bit-Dualzählers 29. Durch eine Voreinstelleinrichtung 45 kann der 8 Bit-Dualzähler 29 voreingestellt werden. Die Takteingänge der 4 Bit-Dualzähler sind mit dem Ausgang der Taktschaltung 31 verbunden, durch die in Abhängigkeit von den auf einem Signalpfad 47 zugeführten Zählerausgangszuständen eine Umschaltung der Taktfrequenz erfolgt. Durch die Umschalteinrichtung 33 kann die Zählrichtung des 8 Bit-Dualzählers 29 umgeschaltet werden. Die Umschalteinrichtung 33 erhält ein Eingangssignal entweder vom Überlaufausgang 49 des 8 Bit-Dualzählers 29 oder von der Analyseeinrichtung 37. Dadurch wird erreicht, daß die Umschalteinrichtung 33 den 8 Bit-Dualzähler 29 umschaltet, wenn der Zählerstand seinen Maximalwert oder seinen Minimalwert erreicht hat. Dadurch wird vermieden, daß der 8 Bit-Dualzähler von seinem Maximalwert zu seinem Minimalwert oder umgekehrt umspringt. Ferner wird die Zählrichtung des 8 Bit-Dualzählers 29 von der Umschalteinrichtung 33 umgeschaltet, wenn durch die Analyseeinrichtung eine Zunahme der Verzerrung des Impulssignals festgestellt wird.

Im folgenden wird die Arbeitsweise des in Fig. 2 gezeigten adaptiven Entzerrers erläutert.

Das über den am Eingang vorgesehenen Entkopplungstransformator 39 eingekoppelte Impulssignal wird dem einstellbaren Entzerrungsnetzwerk 23 zugeführt. Das Impulssignal wird am Ausgang des einstellbaren Entzerrungsnetzwerks 23 abgegriffen und dem Impulsformer 35 zugeführt. In diesem wird es mit einem oberen und/oder unteren Schwellwert verglichen. Abhängig von diesem Vergleichsergebnis wird ein sogenanntes regeneriertes Impulssignal erzeugt. Ein bipolares bzw. pseudoternäres Impulssignal wird in dem Impulsformer 35 ferner in binäre Daten umgesetzt. Durch die Analyseeinrichtung 37 wird eine Zunahme der Flankenabweichungen des von den Eingangsimpulsen abgeleiteten Signals von einem Referenzsignal ermittelt und ein entsprechendes Signal an die Umschalteinrichtung 33 abgegeben. Durch diese wird dann die Zählrichtung des 8 Bit-Dualzählers 29 umgeschaltet. Da eine Flankenabweichungszunahme auf eine Fehleinstellung des einstellbaren Entzerrungsnetzwerkes 23 zurückzuführen ist, wird durch die Umschaltung der Zählrichtung des 8 Bit-Dualzählers 29 eine Einstellung des einstellbaren Entzerrungsnetzwerkes 23 im Sinne eines zunehmenden Entzerrungsgrades bewirkt. Der Entzerrungsgrad des einstellbaren Entzerrungsnetzwerkes 23 wird nun solange in die richtige Richtung verstellt, bis der optimale Entzerrungsgrad überschritten wird. Nach Überschreiten des optimalen Entzerrungsgrades erfolgt eine erneute Umschaltung der Zählrichtung des 8 Bit-Dualzählers 29, so daß nun der Entzerrungsgrad wieder verringert wird, bis der optimale Entzerrungsgrad unterschritten wird. Somit pendelt die Einstellung des Entzerrungsnetzwerkes 23 ständig um den optimalen Wert des Entzerrungsgrades.

Da die Änderung des Entzerrungsgrades des einstellbaren Entzerrungsnetzwerkes 23 aufgrund der gewählten Widerstandswerte der in Abhängigkeit von den Zählerausgangssignalen zu- bzw. abschaltbaren Widerstände 41 nichtlinear erfolgt, kann durch die Taktschaltung 31 die Taktfrequenz umgeschaltet werden. Da mit Zu- bzw. Abschaltung von Widerständen 41 mit kleinen Widerstandswerten der Entzerrungsgrad des einstellbaren Entzerrungsnetzwerkes 23 nur langsam verändert wird, können diese Widerstandwerte mit einer höheren Taktfrequenz zu- bzw. abgeschaltet werden. Es kann somit eine quasi kontinuierliche Änderung des Entzerrungsgrades des einstellbaren Entzerrungsnetzwerkes 23 erreicht werden.

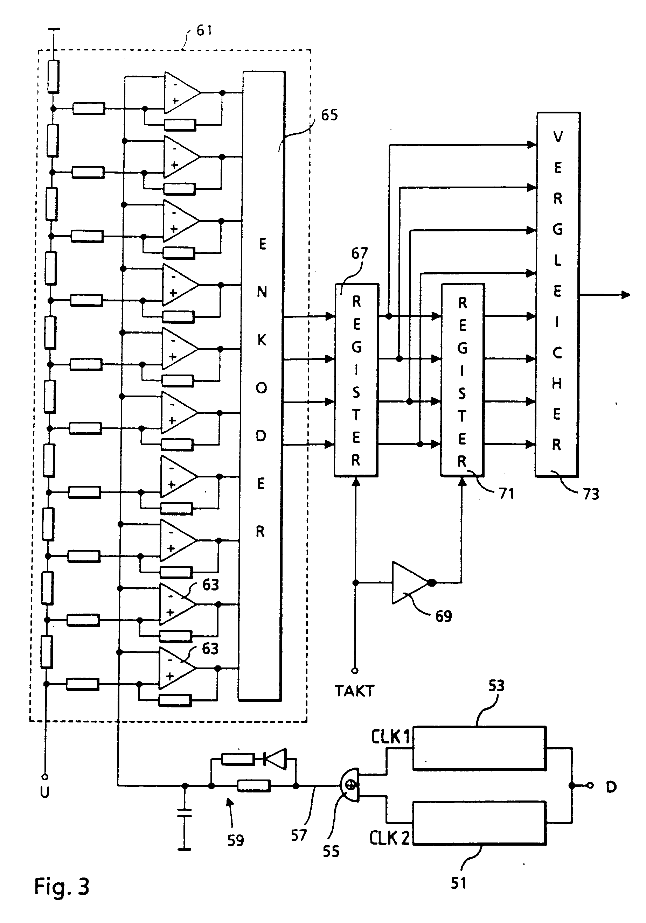

In Fig. 3 ist eine erste Ausführungsform der im Blockschaltbild von Fig. 2 dargestellten Analyseeinrichtung 37 im Detail dargestellt. Sie enthält zwei Taktgenertoren (Taktrückgewinnungsschaltungen)51 und 53, von denen sich der eine den etwaigen Flankenabweichungen des regenerierten Impulssignales D mit nur geringer Verzögerung und der andere mit größerer Verzögerung anpaßt. Die Ausgangssignale CLK2 und CLK1 der beiden Taktgeneratoren (Taktrückgewinnungsschaltungen) 51 und 53 werden durch ein EXLUSIV-ODER-Glied 55 miteinander verknüpft. Da bei Flankenabweichungsänderungen von dem schneller reagierenden Taktgenerator (Taktrückgewinnungsschaltung) bereits eine Ausgangssignaländerung vorgenommen wird, während an dem langsam reagierenden Taktgenerator (Taktrückgewinnungsschaltung) noch keine solche Änderung erfolgt, erscheint am Ausgang 57 des EXKLUSIV-ODER-Gliedes 55 ein impulsförmiges Signal, das durch eine Integrationsschaltung 59 zu einem Gleichspannungssignal aufintegriert wird. Dieses wird von einem nach dem Parallelverfahren arbeitenden Analog/Digital-Umsetzer 61 in einen Digitalwert umgesetzt. Die Analog/Digital-Umsetzung erfolgt dabei durch einen gleichzeitigen Vergleich des Gleichspannungssignals mit verschiedenen Referenzspannungen mittels Komparatoren 63 und durch Umsetzung des Vergleichsergebnisses in den Digitalwert mit Hilfe eines Encoders 65. Der an den Ausgängen des Analog/Digital-Umsetzers 61 erscheinende Digitalwert wird mit der positiven Taktflanke in ein erstes Speicherregister 67 übernommen. Da das Taktsignal durch einen Inverter 69 invertiert wird, wird der im ersten Speicherregister 67 enthaltene Digitalwert mit der negativen Flanke des Taktsignales in ein zweites Speicherregister 71 übernommen. Mit der positiven Flanke des nächsten Taktimpulses wird der nächste Digitalwert von den Ausgängen des Analog/ Digital-Umsetzers 61 in das erste Speicherregister 67 übernommen. Noch bevor dieser zweite Digitalwert durch die negative Taktflanke in das zweite Speicherregister 71 übernommen wird, werden die Inhalte beider Speicherregister 67 und 71 durch einen Vergleicher 73 miteinander verglichen. Ist der im ersten Speicherregister 67 enthaltene Digitalwert größer als der im zweiten Speicherregister 71 enthaltene Digitalwert, so liegt eine Flankenabweichungszunahme vor. Da eine Flankenabweichungszunahme auf eine zunehmende Fehleinstellung des einstellbaren Entzerrungsnetzwerkes 23 (Fig. 2) zurückzuführen ist, wird in diesem Falle durch das Ausgangssignal des Vergleichers 73 eine Zählrichtungsumkehr des 8 Bit-Dualzählers 29 (Fig. 2) bewirkt. Diese Zählrichtungsumkehr hat zur Folge, daß nun das einstellbare Entzerrungsnetzwerk 23 (Fig. 2) in die richtige Richtung, nämlich in Richtung eines optimalen Entzerrungsgrades, eingestellt wird.

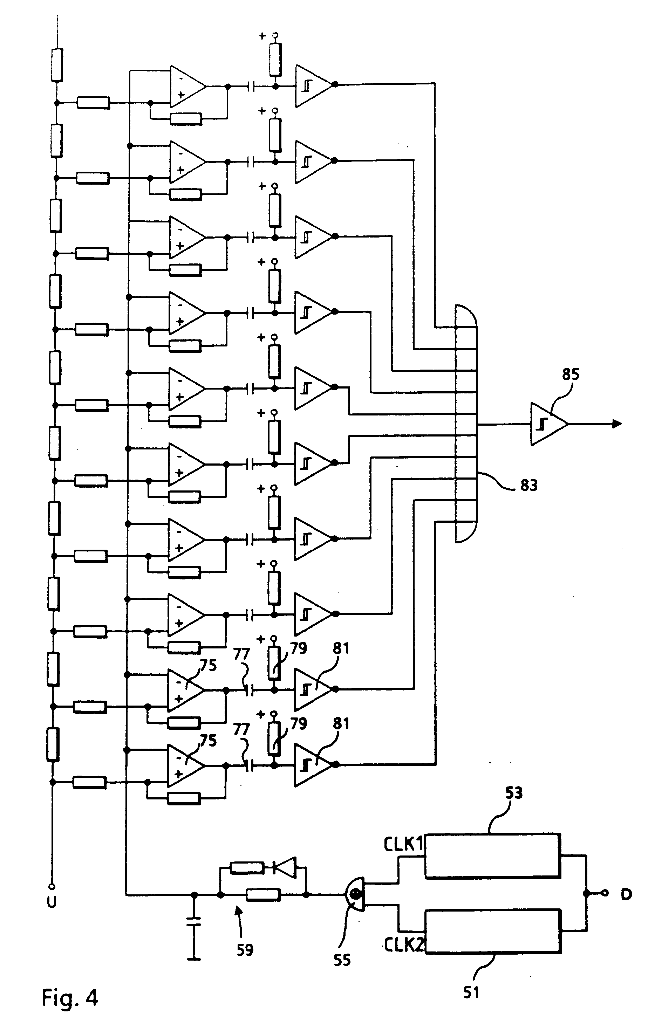

In Fig. 4 ist eine zweite Ausführungsform der in Fig. 2 dargestellten Analyseeinrichtung 37 gezeigt. Diese Ausführungsform stimmt mit der in Fig. 3 gezeigten Ausführungsform in den beiden Taktgeneratoren (Taktrückgewinnungschaltungen) 51 und 53, dem EXKLUSIV-ODER-Glied 55 und der Integrationsschaltung 59 überein. Auch bei dieser Ausführungsform wird das am Ausgang der Integrationsschaltung 59 erscheinende Gleichspannungssignal gleichzeitig einer Reihe von Komparatoren 75 zugeführt. Da diese Komparatoren 75 ausgangsseitig unter Zwischenschaltung jeweils eines Kondensators 77 über einen Widerstand 79 mit positivem Potential und dem Eingang eines invertierenden Schmitt-Triggers 81 verbunden sind, entsteht am Ausgang des Schmitt-Triggers 81 nur dann ein Impuls, wenn das Gleichspannungssignal die betreffende Referenzspannung in positiver Richtung überschreitet. Die invertierenden Schmitt-Trigger 81 haben eine Schalthysterese, durch die ein zu häufiges Umschalten vermieden wird. Da die Ausgänge der Schmitt-Trigger 81 durch ein disjunktives Verknüpfungsglied 83 miteinander verknüpft sind, erscheint am Ausgang des disjunktiven Verknüpfungsgliedes 83 dann ein Impuls, wenn an irgendeinem der Schmitt-Trigger 81 ein Impuls erscheint. Ein am Ausgang des disjunktiven Verknüpfungsgliedes 83 erscheinender Impuls wird zur Signalformung einem weiteren Schmitt-Trigger 85 zugeführt.

Durch diese Analyseeinrichtung wird erreicht, daß bei Überschreiten jeweils einer der Komparatorschwellen durch das Gleichspannungssignal am Ausgang des Schmitt-Triggers 85 ein Impuls erzeugt wird, während bei einem Unterschreiten einer Referenzspannung durch das Gleichspannungssignal kein Impuls erzeugt wird. Nur bei einem zunehmenden Gleichspannungssignal wird die Zählrichtung des 8 Bit-Dualzählers 29 (Fig. 2) umgeschaltet. Durch diese Umschaltung wird wiederum bewirkt, daß der Entzerrungsgrad des einstellbaren Entzerrungsnetzwerkes 23 (Fig. 2) in die richtige Richtung, nämlich in Richtung eines optimalen Entzerrungsgrades, verstellt wird.

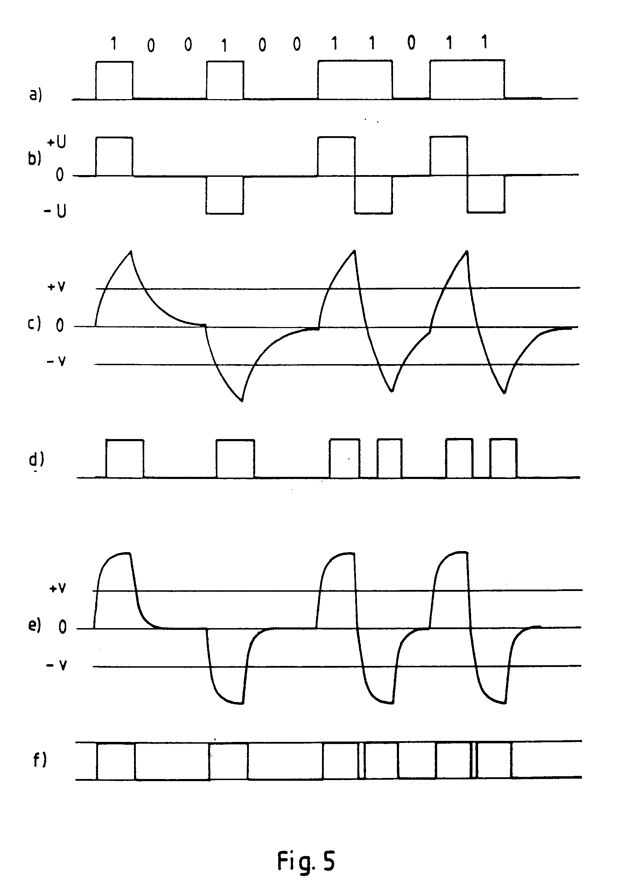

Zur Verdeutlichung der Funktion des erfindungsgemäßen adaptiven Entzerrers zeigen Fig. 5a bis 5f Signalverläufe eines Impulssignales an mehreren Stellen eines Übertragungsweges von einer digitalen Fernsprech- und Datenvermittlungsanlage zu einem Teilnehmerendgerät.

Fig. 5a zeigt einen Ausschnitt aus einem Datenblock, der von der digitalen Fernsprech- und Datenvermittlungsanlage auszusenden ist. In Fig. 5b ist der Signalverlauf dieses Ausschnittes nach der Umsetzung in den AMI-Code dargestellt. Mit diesem Signal wird die Zweidrahtleitung 3 (Fig. 1) angesteuert. Fig. 5c zeigt den Signalverlauf am Ausgang des Entzerrungsnetzwerks 23 bei nicht optimaler Entzerrung. Die Linien +v und -v zeigen den oberen und unteren Schwellwert des Impulsformers 35. In Fig. 5d ist das daraus resultierende Ausgangssignal des Impulsformers 35 dargestellt, das dem in Fig. 5a gezeigten Datenblockabschnitt ähnlich ist.

Der Signalverlauf nach Fig. 5e ergibt sich, wenn die Entzerrung besser eingestellt ist als in Fig. 5c dargestellt. Daraus ergibt sich dann ein entsprechendes Ausgangssignal des Impulsformers 35, das in Fig. 5f dargestellt ist und dem in Fig. 5a gezeigten Datenblockausschnitt sehr nahe kommt. Damit ist deutlich die Wirkung des erfindungsgemäßen Entzerrers auf das Eingangssignal des Impulsformers 35 zu erkennen.

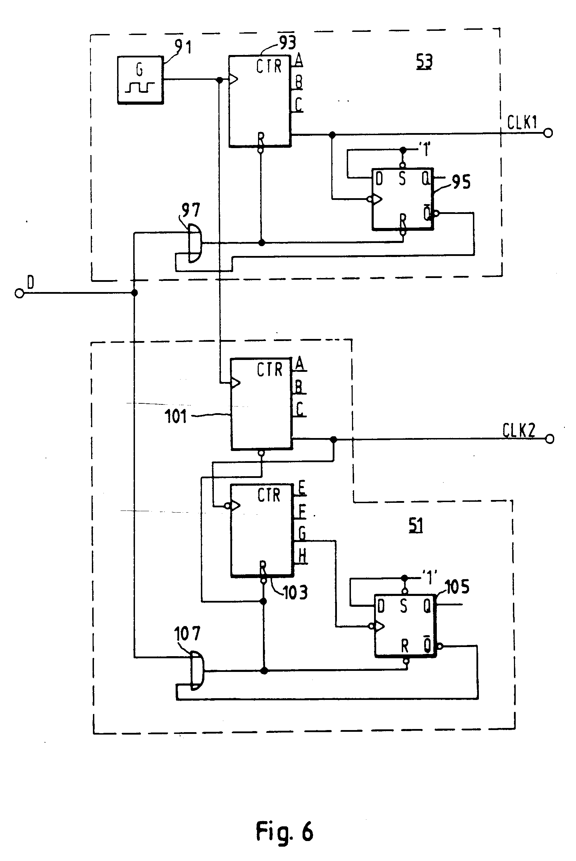

Fig. 6 zeigt eine mögliche Ausführungsform der in Fig. 3 und 4 dargestellten beiden Taktrückgewinnungsschaltungen 51 und 53. Das Taktsignal für beide Taktrückgewinnungsschaltungen 51 und 53 liefert ein Generator 91, dessen Ausgang mit den Takteingängen zweier 4 Bit-Dualzähler 93 und 101 verbunden ist und der mit der 16-fachen Frequenz des Datenübertragungstaktes arbeitet. Das Ausgangssignal der höchsten Zählstufe des ersten 4 Bit-Dualzählers 93 ist das Ausgangssignal CLK1 der Taktrückgewinnungsschaltung 53 und ist gleichzeitig auf den Takteingang eines Flip-Flop 95 geführt, das mit negativen Flanken setzbar ist. Rückgesetzt wird dieses Flip-Flop 95 über ein "0"-Signal an seinem Rücksetzeingang R. Dazu ist dieser wie der Rücksetzeingang des 4 Bit-Dualzählers 93 mit dem Ausgang eines ODER-Gliedes 97 verbunden, dessen Eingänge mit dem Eingang D bzw. mit dem invertierenden Ausgang Q̅ des Flip-Flops 95 verbunden sind. Durch diese Verknüpfung wird immer dann ein Rücksetzsignal erzeugt, wenn am Eingang D ein "0"-Signal auftritt und das Flip-Flop 95 gesetzt ist.

Der 4 Bit-Dualzähler 101 ist mit einem weiteren 4 Bit-Dualzähler 103 so geschaltet, daß beide gemeinsam einen 8 Bit-Dualzähler bilden. Das Ausgangssignal CLK2 der Taktrückgewinnungsschaltung 51 liefert der Ausgang der vierten Zählstufe, das Ausgangssignal der siebten Zählstufe ist das Takteingangssignal für ein Flip-Flop 105. Die Rücksetzschaltung für den 8 Bit-Dualzähler und das Flip-Flop 105 entspricht der Rücksetzschaltung in der Taktrückgewinnungsschaltung 53 und umfaßt ein ODER-Glied 107, das von dem Eingang D und von dem invertierenden Ausgang Q̅ des Flip-Flops 105 her angesteuert wird.

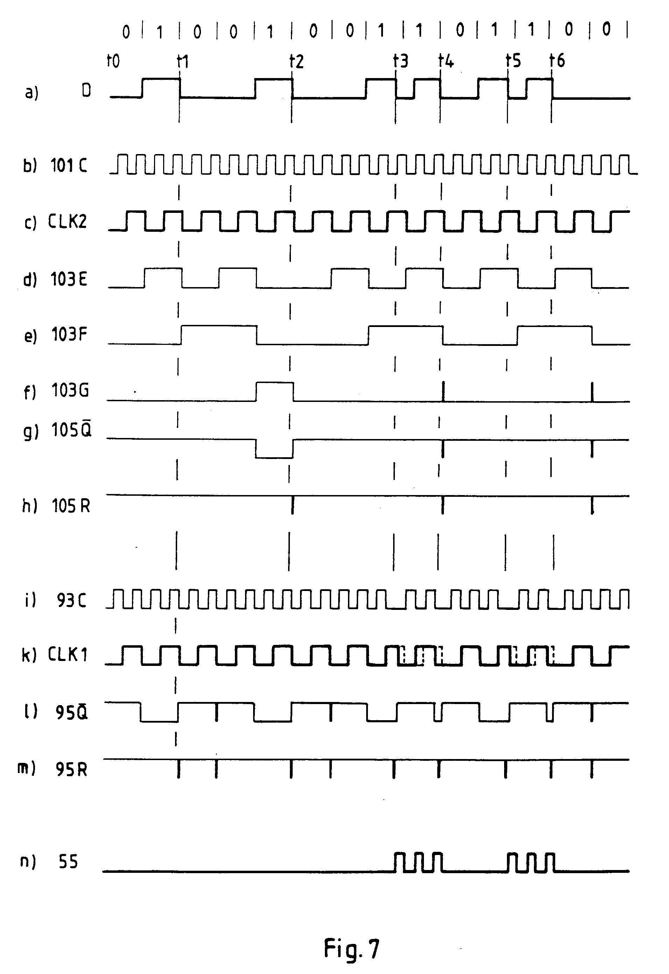

In Fig. 7 ist das Verhalten der beiden Taktrückgewinnungsschaltungen 51, 53 bei einem Eingangssignal entsprechend Fig. 5d am Eingang D gezeigt. Zur Erläuterung wird vorausgesetzt, daß zum Zeitpunkt t0 alle Zähler und Flip-Flops rückgesetzt sind.

In Fig. 7a ist das Eingangssignal mit Zeitpunkten t0 bis t6 und seinen logischen Zuständen "1" und "0" dargestellt. Fig. 7b und d zeigen die Ausgangssignale am Ausgang C des Zählers 101 und am Ausgang E des Zählers 103.

Mit der ersten fallenden Flanke am Ausgang F des 4 Bit-Dualzählers 103 (Fig. 7e), d.h. nach vier Datenbits, werden der nächstfolgende Ausgang G (Fig. 7f) und das Flip-Flop 105 (Fig. 7g) gesetzt. Dieser Zustand des Flip-Flops 105 bleibt erhalten, bis zum Zeitpunkt t2 die Eingangsdaten am Eingang D (Fig. 7a) den Zustand "0" annehmen und damit die Rücksetzbedingung in der Taktrückgewinnungsschaltung 51 erfüllt wird (Fig. 7h). Durch dieses von der fallenden Flanke der Daten am Eingang D abhängige Rücksetzen wird der Ausgang CLK2 (Fig. 7c) der Taktrückgewinnungsschaltung 51 mit den Eingangsdaten synchronisiert. Nach weiteren vier Datenbits wird dann zum Zeitpunkt t4 die Rücksetzbedingung sofort erfüllt, da die Eingangsdaten am Eingang D (Fig. 7a) gleichzeitig mit dem invertierenden Ausgang Q̅ des Flip-Flops 105 (Fig. 7g) den Zustand "0" annehmen. Nach den nächsten vier Datenbits ist die Rücksetzbedingung sofort erfüllt, da die Eingangsdaten am Eingang D bereits den Zustand "0" haben.

Diese Taktrückgewinnung synchronisiert sich also immer dann mit der fallenden Flanke der Eingangsdaten, wenn vier Datenbits nach dem letzten Rücksetzen den Zustand "1" haben. Die Anzahl der Datenbits zwischen zwei möglichen Synchronisierzeitpunkten wird durch die Anzahl der Zählerstufen zwischen dem Ausgang CLK2 des Zählers 101 und dem Ausgang des Zählers 103 bestimmt, der das Flip-Flop 105 ansteuert.

Um mit dieser Schaltung ein Referenzsignal für empfangene Signale zu erzeugen, ist der Abstand zwischen zwei möglichen Synchronisierzeitpunkten möglichst groß zu wählen. Dieser wird aber durch die mögliche Frequenzabweichung zwischen Sender (Fernsprechvermittlungsanlage 1) und dem Generator 91 auf einen Maximalwert begrenzt.

Im Gegensatz dazu ist die Taktrückgewinnungsschaltung 53 so geschaltet, daß jede fallende Flanke der Eingangsdaten einen Synchronisierzeitpunkt darstellen kann. Diese Schaltung reagiert also sofort auf zeitliche Abweichungen der fallenden Flanken der Eingangsdaten von ihrem erwarteten Zeitpunkt. So wird zu allen Zeitpunkten t1 bis t6 (Fig. 7a) der Ausgang CLK1 (Fig. 7k) der Taktrückgewinnungsschaltung 53 mit den Eingangsdaten nachsynchronisiert. In den Signalverlauf CLK1 (Fig. 7k) ist der Verlauf von CLK2 als "erwarteter" Verlauf bzw. Referenzwert gestrichelt eingezeichnet.

Im übrigen sind für die Taktrückgewinnungsschaltung 53 entsprechende Signalverläufe wie für die Taktrückgewinnungsschaltung 51 dargestellt. Fig. 7i und 1 zeigen die Ausgangssignale an dem Ausgang C des Zählers 93 und am invertierenden Ausgang Q̅ des Flip-Flops 95. Fig. 7m zeigt den Signalverlauf an den Rücksetzeingängen des Zählers 93 und des Flip-Flops 95.

Der Signalverlauf nach Fig. 7n zeigt das Ausgangssignal des EXLUSIV-ODER-Glieds 55 (Fig. 3, 4), das die beiden Signale CLK1 und CLK2 verknüpft.

Die in Fig. 6 gezeigten Dualzähler 93, 101, 103 bilden einzeln bzw. kombiniert einen Frequenzteiler.

## Patentansprüche

1. Verfahren zur adaptiven Entzerrung von Impulssignalen, insbesondere von bipolaren Impulssignalen, bei dem ein Impulssignal hinsichtlich seiner Verzerrung analysiert wird und das Analysenergebnis ein variables Entzerrungsnetzwerk in seinen Übertragungseigenschaften steuert, dadurch **gekennzeichnet**, daß zur Analyse des Impulssignals die zeitlichen Flankenabweichungen eines von den am Ausgang des variablen Entzerrungsnetzwerkes (23) auftretenden Impulsen abgeleiteten Signals von einem Referenzsignal festgestellt werden und daß in Abhängigkeit von den festgestellten Flankenabweichungen einzelne Netzwerkteile (41) des variablen Entzerrungsnetzwerkes (23) im Sinne einer Minimierung der Flankenabweichungen zu- bzw. abgeschaltet werden.

2. Verfahren nach Anspruch 1, dadurch **gekennzeichnet**, daß die festgestellten Flankenabweichungen aufeinanderfolgender Impulse bzw. Impulsfolgen zur Ermittlung einer Flankenabweichungszu- bzw. abnahme miteinander verglichen werden und daß bei einer ermittelten Flankenabweichungszunahme solange nacheinander Netzwerkteile (41) mit gegenüber ihren Vorgängern jeweils größerer Entzerrungswirkung zugeschaltet werden, bis sich die daraus resultierende Wirkung der Flankenabweichungsabnahme wieder umkehrt.

3. Verfahren nach Anspruch 1 oder 2, dadurch **gekennzeichnet**, daß die Zu- bzw. Abschaltung von Netzwerkteilen (41) von einem getakteten Dualzähler (29) gesteuert wird, dessen Zählrichtung in Abhängigkeit von der festgestellten Flankenabweichungsänderung umgeschaltet wird.

4. Verfahren nach Anspruch 3, dadurch **gekennzeichnet**, daß das Taktsignal für den Dualzähler (29) von einer Taktschaltung (31) erzeugt wird, deren Taktfrequenz in Abhängigkeit von den Zuständen der Zählerausgangssignale des Dualzählers (29) so umschaltbar ist, daß bei den Zählerständen, bei denen die vom Dualzähler (29) gesteuerte Zu- bzw. Abschaltung von Netzwerkteilen (41) nur einen geringen Einfluß auf den Entzerrungsgrad des variablen Entzerrungsnetzwerkes (23) hat, auf eine im Vergleich zu einem Standardzähltakt höhere Taktfrequenz umgeschaltet wird.

5. Verfahren nach Anspruch 3 oder 4, dadurch **gekennzeichnet**, daß die Zählrichtung des Dualzählers (29) bei Erreichen seines Maximal- oder Minimalzählerstandes umgeschaltet wird.

6. Verfahren nach einem der Ansprüche 3 bis 5, dadurch **gekennzeichne**t, daß die Zu- bzw. Abschaltung von Netzwerkteilen (41) zur Voreinstellung des Entzerrungsgrades des variablen Entzerrungsnetzwerkes (23) durch Voreinstellung des Zählerstandes des Dualzählers (29) erfolgt.

7. Verfahren nach einem der Ansprüche 3 bis 6, dadurch **gekennzeichnet**, daß von den Ausgängen des Dualzählers (29) Halbleiterschalter (43) gesteuert werden, durch die die Zu- bzw. Abschaltung von Netzwerkteilen (41) erfolgt.

8. Verfahren nach einem der vorhergehenden Ansprüche, dadurch **gekennzeichnet**, daß für das am Ausgang des variablen Entzerrungsnetzwerkes (23) auftretende Impulssignal vor seiner Analyse eine Impulsformung durchgeführt wird, bei der durch Vergleich mit einem oberen und/oder unteren Schwellwert ein von dem Vergleichsergebnis abhängiges sogenanntes regeneriertes Impulssignal erzeugt wird.

9. Verfahren nach Anspruch 8, dadurch **gekennzeichnet**, daß ein bipolares (pseudoternäres) Impulssignal bei der Impulsformung in binäre Daten umgesetzt wird.

10. Verfahren nach einem der vorhergehenden Ansprüche, dadurch **gekennzeichnet**, daß das zur Feststellung von Flankenabweichungen vom Impulssignal abgeleitete Signal und das Referenzsignal von Taktgeneratoren (Taktrückgewinnungsschaltungen) (51, 53) erzeugt werden, die mit dem ersten Impuls eines zu entzerrenden Übertragungsblocks gestartet werden und mit unterschiedlicher Trägheit auf das Impulssignal synchronisiert werden.

11. Verfahren nach Anspruch 10, dadurch **gekennzeichnet**, daß die Ausgangssignale der Taktgeneratoren (51, 53) auf Übereinstimmung geprüft werden.

12. Verfahren nach Anspruch 11, dadurch **gekennzeichnet**, daß das die Flankenabweichung anzeigende Signal zu einem Gleichspannungssignal aufintegriert wird.

13. Verfahren nach Anspruch 12, dadurch **gekennzeichnet**, daß das Gleichspannungssignal in einen Digitalwert umgesetzt wird.

14. Verfahren nach Anspruch 13, dadurch **gekennzeichnet**, daß die Analog/Digital-Umsetzung durch einen gleichzeitigen Vergleich des Gleichspannungssignals mit verschiedenen Referenzspannungen und durch Umsetzung des Vergleichsergebnisses in einen Digitalwert erfolgt und daß der jeweilige Digitalwert mit jeweils der positiven Flanke eines Übernahmetaktimpulses zunächst in ein erstes Speicherregister (67) und mit der negativen Flanke dann in ein zweites Speicherregister (71) übernommen wird, daß mit der positiven Flanke des nächstfolgenden Übernahmetaktimpulses der nächstfolgende Digitalwert in das erste Speicherregister (67) geladen wird und daß die Inhalte beider Speicherregister (67, 71) dann zur Ermittlung einer Flankenabweichungszu- bzw. abnahme miteinander verglichen werden.

15. Verfahren nach Anspruch 12, dadurch **gekennzeichnet**, daß zur Ermittlung einer Flankenabweichungszu- bzw. abnahme das ein Maß für die Flankenabweichung darstellende Gleichspannungssignal gleichzeitig mit verschiedenen Referenzspannungen verglichen wird und daß nur dann ein eine Flankenabweichungszunahme anzeigendes Signal erzeugt wird, wenn das Gleichspannungssignal irgendeine der Referenzspannungen überschreitet.

16. Schaltungsanordnung zur Durchführung des Verfahrens nach einem der vorhergehenden Ansprüche, mit einer Analyseeinrichtung (37) zur Analyse des Impulssignals hinsichtlich seiner Verzerrung und mit einer Steuereinrichtung (29) zur Steuerung des variablen Entzerrungsnetzwerkes (23), dadurch **gekennzeichnet**, daß die Analyseeinrichtung (37) eine Einrichtung zur Feststellung von Flankenabweichungsänderungen und eine Einrichtung zur Ermittlung des Vorzeichens der festgestellten Flankenabweichungsänderung (Zu- bzw. Abnahme) enthält und daß die Steuereinrichtung einen getakteten Dualzähler (29) enthält, dessen Zählrichtung bei einer durch die Analyseeinrichtung (37) ermittelten Flankenabweichungszunahme umgeschaltet wird und dessen Ausgangssignale die Zu- bzw. Abschaltung einzelner Netzwerkteile (41) des variablen Entzerrungsnetzwerkes (23) steuert.

17. Schaltungsanordnung nach Anspruch 16, dadurch **gekennzeichnet**, daß als zu- bzw. abschaltbare Netzwerkteile ohmsche Widerstände (41) vorgesehen sind, wobei sich die Widerstandswerte zweier benachbarter Widerstände (41) jeweils um den Faktor 2 unterscheiden.

18. Schaltungsanordnung nach Anspruch 16 oder 17, dadurch **gekennzeichnet**, daß eine Umschalteinrichtung (33) vorgesehen ist, die die Zählrichtung des Dualzählers (29) bei Erreichen seines Maximal- oder Minimalzählerstandes bzw. bei entsprechender Ansteuerung durch die Analyseeinrichtung (37) umschaltet.

19. Schaltungsanordnung nach Anspruch 18, dadurch **gekennzeichnet**, daß die Umschalteinrichtung (33) eine bistabile Kippstufe enthält.

20. Schaltungsanordnung nach einem der Ansprüche 16 bis 19, dadurch **gekennzeichnet**, daß die Einrichtung zur Feststellung von Flankenabweichungsänderungen zwei parallel geschaltete synchronisierbare Taktgeneratoren bzw. Taktrückgewinnungsschaltungen (51, 53) enthält, denen ein EXKLUSIV-ODER-Glied (55) nachgeschaltet ist.

21. Schaltungsanordnung nach einem der Ansprüche 16 bis 20, dadurch **gekennzeichnet**, daß die Einrichtung zur Ermittlung des Vorzeichens der festgestellten Flankenabweichungsänderung einen nach dem Parallelverfahren arbeitenden Analog/Digital-Umsetzer (61), dessen Ausgänge mit den Eingängen des ersten von zwei in Serie geschalteten Speicherregistern (67, 71) verbunden sind, einen Inverter (69), der den Übernahmetaktimpuls des ersten Speicherregisters (67) vor Zuführung zum zweiten Speicherregister (71) invertiert, und einen Vergleicher (73) zum Vergleich der Ausgangssignale der beiden Speicherregister (67, 71) enthält.

22. Schaltungsanordnung nach einem der Ansprüche 16 bis 20, dadurch **gekennzeichnet**, daß die Einrichtung zur Ermittlung des Vorzeichens der festgestellten Flankenabweichungsänderung eine Reihe parallel betriebener Komparatoren (75) enthält, die ausgangsseitig jeweils unter Zwischenschaltung eines Kondensators (77) über einen Widerstand (79) mit positivem Potential und über einen invertierenden Schmitt-Trigger (81) mit einem Eingang eines disjunktiven Verknüpfungsgliedes (83) verbunden sind, dessen Ausgang mit einem weiteren Schmitt-Trigger (85) verbunden ist.

23. Schaltungsanordnung nach einem der Ansprüche 20 bis 22, dadurch **gekennzeichnet**, daß die eine Taktrückgewinnungsschaltung (53) einen Frequenzteiler (Dualzähler 93) und eine bistabile Kippstufe (95) enthält, die durch ein Ausgangssignal des Frequenzteilers (Dualzähler 93) setzbar ist, welches auch das Ausgangssignal (CLK1) dieser Taktrückgewinnungsschaltung (53) ist, und gemeinsam mit dem Frequenzteiler (Dualzähler 93) rücksetzbar ist.

24. Schaltungsanordnung nach einem der Ansprüche 20 bis 23, dadurch **gekennzeichnet**, daß die andere Taktrückgewinnungsschaltung (51) einen Frequenzteiler (Dualzähler 101, 103) zur Abgabe ihres Ausgangssignals (CLK2) und eine bistabile Kippstufe (105) enthält, die durch ein Ausgangssignal des Frequenzteilers (103) setzbar ist, welches durch eine weitere Frequenzteilung des Ausgangssignals dieser Taktrückgewinnungsschaltung (51) gebildet wird, und gemeinsam mit dem Frequenzteiler (101, 103) rücksetzbar ist.

25. Schaltungsanordnung nach Anspruch 23 oder 24, dadurch **gekennzeichnet**, daß das Rücksetzsignal durch logisches Verknüpfen (97, 107) der Eingangsdaten der Taktrückgewinnungsschaltung (53, 51) mit einem Ausgang der bistabilen Kippstufe (95, 105) erzeugt wird.

26. Schaltungsanordnung nach einem der Ansprüche 23 bis 25, dadurch **gekennzeichnet**, daß beide Taktrückgewinnungsschaltungen (51, 53) von einem gemeinsamen Generator (91) gesteuert werden, dessen Taktfrequenz ein ganzzahliges Vielfaches des Datenübertragungstaktes ist.

## Claims

1. Method for the adaptive equalisation of pulse signals, preferably of bipolar pulse signals, in which a pulse signal is analysed with respect to its distortion and the result of analysis controls a variable equalising network in its transmission characteristics, characterised in that, for analysing the pulse signal, the temporal edge deviations of a signal derived from the pulses occurring at the output of the variable equalising network (23) from a reference signal are determined, and in that individual network components (41) of the variable equalising network (23) are connected or disconnected depending on the edge deviations determined with the purpose of minimising the edge deviations.

2. Method according to Claim 1, characterised in that the edge deviations determined of successive pulses or pulse trains are compared with one another to detect an increase or decrease in the edge deviation, and in that if an increase in the edge deviation is detected, network components (41) having a greater equalising effect than their predecessors in each case are successively connected until the resulting effect reverses the increase in the edge deviation again.

3. Method according to Claim 1 or 2, characterised in that the connection and disconnection respectively of network components (41) is controlled by a clocked binary counter (29), the counting direction of which is switched over depending on the change in the edge deviation determined.

4. Method according to Claim 3, characterised in that the clock signal for the binary counter (29) is generated by a clock circuit (31), the clock frequency of which can be switched over depending on the states of the counter output signals of the binary counter (29) in such a way that, in the case of the counter readings where the connection or disconnection of network components (41) controlled by the binary counter (29) has only a slight influence on the degree of equalisation of the variable equalising network (23), a switchover is made to a higher clock frequency in comparison with a standard counting pulse.

5. Method according to Claim 3 or 4, characterised in that the counting direction of the binary counter (29) is switched over when it reaches its maximum or minimum counter reading.

6. Method according to one of Claims 3 to 5, characterised in that the connection or disconnection of network components (41) to preset the degree of equalisation of the variable equalising network (23) is performed by presetting the counter reading of the binary counter (29).

7. Method according to one of Claims 3 to 6, characterised in that semiconductor switches (43) are controlled by the outputs of the binary counter (29), by means of which semiconductor switches the connection or disconnection of network components (41) is performed.

8. Method according to one of the preceding claims, characterised in that, before it is analyzed, a pulse shaping is carried out for the pulse signal occurring at the output of the variable equalising network (23), in which, by means of comparison with an upper and/or lower threshold value, a so-called regenerated pulse signal dependent on the comparison result is generated.

9. Method according to Claim 8, characterised in that a bipolar (pseudoternary) pulse signal is converted into binary data during the pulse shaping.

10. Method according to one of the preceding claims, characterised in that the signal derived from the pulse signal to determine edge deviations and the reference signal are generated by clock generators (clock recovery circuits) (51, 53) which are started by the first pulse of a transmission block to be equalised and are synchronised with the pulse signal with different inertia.

11. Method according to Claim 10, characterised in that the output signals of the clock generators (51, 53) are checked to see that they match.

12. Method according to Claim 11, characterised in that the signal indicating the edge deviation is integrated into a direct voltage signal.

13. Method according to Claim 12, characterised in that the direct voltage signal is converted into a digital value.

14. Method according to Claim 13, characterised in that the analog/digital conversion is performed by means of a simultaneous comparison of the direct voltage signal with different reference voltages and by conversion of the comparison result into a digital value, and in that the respective digital value is transferred with in each case the positive edge of a transfer clock pulse firstly into a first memory register (67) and then with the negative edge into a second memory register (71), in that the next digital value is loaded into the first memory register (67) with the positive edge of the next transfer clock pulse, and in that the contents of both memory registers (67, 71) are then compared with one another to detect any increase or decrease in the edge deviation.

15. Method according to Claim 12, characterised in that, to detect an increase or decrease in the edge deviation, the direct voltage signal, which represents a measure of the edge deviation, is simultaneously compared with different reference voltages, and in that a signal indicating an increase in the edge deviation is generated only when the direct voltage signal exceeds any one of the reference voltages.

16. Circuit arrangement for carrying out the method according to one of the preceding claims, having an analysing device (37) for analysing the pulse signal with respect to its distortion and having a control device (29) for controlling the variable equalising network (23), characterised in that the analysing device (37) contains a device for determining changes in the edge deviation and a device for detecting the sign of the change in the edge deviation determined (increase or decrease), and in that the control device contains a clocked binary counter (29), the counting direction of which is switched over when an increase in the edge deviation is detected by the analysing device (37), and the output signals of which control the connection or disconnection of individual network components (41) of the equalising network (23).

17. Circuit arrangement according to Claim 16, characterised in that ohmic resistors (41) are provided as network components that can be connected or disconnected, the resistance values of two adjacent resistors (41) differing by the factor of 2 in each case.

18. Circuit arrangement according to Claim 16 or 17, characterised in that a switchover device (33) is provided which switches over the counting direction of the binary counter (29) when it reaches its maximum or minimum counter reading or when correspondingly driven by the analysing device (37).

19. Circuit arrangement according to Claim 18, characterised in that the switchover device (33) contains a bistable circuit.

20. Circuit arrangement according to one of Claims 16 to 19, characterised in that the device for determining changes in the edge deviation contains two synchronisable clock generators or clock recovery circuits (51, 53) connected in parallel, connected downstream of which is an EXCLUSIVE-OR gate (55).

21. Circuit arrangement according to one of Claims 16 to 20, characterised in that the device for detecting the sign of the change in the edge deviation determined contains an analog/digital converter (61) operating according to the parallel method, the outputs of which are connected to the inputs of the first of two memory registers (67, 71) connected in series, an inverter (69) which inverts the transfer clock pulse of the first memory register (67) before it is sent to the second memory register (71), and a comparator (73) for comparing the output signals of the two memory registers (67, 71).

22. Circuit arrangement according to one of Claims 16 to 20, characterised in that the device for detecting the sign of the change in the edge deviation determined contains a row of comparators (75) operated in parallel, which are connected on the output side, in each case with a capacitor (77) connected between, via a resistor (79) with positive potential and via an inverting Schmitt trigger (81) to one input of an OR gating element (83), the output of which is connected to a further Schmitt trigger (85).

23. Circuit arrangement according to one of Claims 20 to 22, characterised in that one clock recovery circuit (53) contains a frequency divider (binary counter 93) and a bistable circuit (95) which can be set by an output signal of the frequency divider (binary counter 93), which is also the output signal (CLK1) of said clock recovery circuit (53), and can be reset together with the frequency divider (binary counter 93).

24. Circuit arrangement according to one of Claims 20 to 23, characterised in that the other clock recovery circuit (51) contains a frequency divider (binary counter 101, 103) for outputting its output signal (CLK2) and a bistable circuit (105) which can be set by an output signal of the frequency divider (103), which is formed by a further frequency division of the output signal of said clock recovery circuit (51), and can be reset together with the frequency divider (101, 103).

25. Circuit arrangement according to Claim 23 or 24, characterised in that the reset signal is generated by logical gating (97, 107) of the input data of the clock recovery circuit (53, 51) with an output of the bistable circuit (95, 105).

26. Circuit arrangement according to one of Claims 23 to 25, characterised in that both clock recovery circuits (51, 53) are controlled by a common generator (91), the clock frequency of which is an integral multiple of the data transmission clock.

## Revendications

1. Procede de correcteur de distorsion adaptative de signaux impulsionnels, notamment de signaux impulsionnels bipolaires, selon lequel on analyse la distorsion d'un signal impulsionnel et le résultat d'analyse commande les caractéristiques de transmission d'un réseau variable de correction des distorsions, caractérisé par le fait que pour l'analyse du signal impulsionnel, les écarts dans le temps des flancs d'un signal, qui est dérivé des impulsions qui apparaissent à la sortie du réseau variable de correction des distorsions (23), par rapport à un signal de référence sont déterminés et qu'en fonction des écarts déterminés des flancs, différentes parties (41) du réseau variable de correction des distorsions (23) sont raccordées ou débranchées, dans le sens d'une minimalisation des écarts des flancs.

2. Procédé suivant la revendication 1, caractérisé par le fait que les écarts déterminés des flancs d'impulsions ou de suites d'impulsions successives sont comparés entre eux pour la détermination de l'accroissement ou de la diminution des écarts entre des flancs et que dans le cas où un accroissement de l'écart des flancs est déterminé, des parties (41) du réseau sont raccordées successivement avec une action de correction des distorsions respectivement plus intense que dans les parties précédentes du réseau, jusqu'à ce que l'action de réduction, qui en résulte, des écarts des flancs s'inverse à nouveau.

3. Procédé suivant la revendication 1 ou 2, caractérisé par le fait que le raccordement ou le débranchement de parties (41) du réseau est commandé par un compteur binaire commandé de façon cadencée (29), dont le sens de comptage est commuté en fonction de la variation déterminée de l'écart des flancs.

4. Procédé suivant la revendication 3, caractérisé par le fait que le signal de cadence pour le compteur binaire (29) est produit par un circuit de cadence (31), dont la fréquence de cadence peut être commutée en fonction des états des signaux de sortie du compteur binaire (29) de sorte que, pour les états de comptage, pour lesquels le raccordement ou le débranchement, commandés par le compteur binaire (22), de parties (41) du réseau a seulement une faible influence sur le degré d'égalisation du réseau variable d'égalisation (23), une commutation est réalisée sur une fréquence de cadence supérieure à une cadence de comptage standard.

5. Procédé suivant la revendication 3 ou 4, caractérisé par le fait que le sens de comptage du compteur binaire (29) est commuté lorsque l'état de comptage maximum ou minimum est atteint.

6. Procédé suivant l'une des revendications 3 à 5, caractérisé par le fait que le raccordement ou le débranchement de parties (41) du réseau pour le préréglage du degré d'égalisation du réseau variable d'égalisation (23) est obtenu au moyen d'un préréglage de l'état de comptage du compteur binaire (29).

7. Procédé suivant l'une des revendications 3 à 6, caractérisé par le fait que les sorties du compteur binaire (29) commandent des interrupteurs à semiconducteurs (43), au moyen desquels s'effectue 1e raccordement ou le débranchement de parties (41) du réseau.

8. Procédé suivant l'une des revendications précédentes, caractérisé par le fait que pour le signal impulsionnel qui apparait à la sortie du réseau variable d'égalisation (23), on exécute, avant l'analyse de ce signal, une mise en forme d'impulsions, lors de laquelle ce qu'on appelle un signal impulsionnel régénéré, qui dépend du résultat de la comparaison, est formé par comparaison avec une valeur de seuil supérieure et/ou une valeur de seuil inférieure.

9. Procédé suivant la revendication 8, caractérisé par le fait qu'un signal impulsionnel bipolaire (pseudoternaire) est converti en des données binaires lors de la mise en forme des impulsions.

10. Procédé suivant l'une des revendications précédentes, caractérisé par le fait que le signal dérivé du signal impulsionnel, sont produits, pour la détermination d'écarts des flancs et le signal de référence, par des générateurs de cadence (circuits de récupération de cadence) (51,53), qui sont déclenchés par la première impulsion d'un bloc de transmission dont les distorsions doivent être corrigées, et avec une inertie différente sur le signal impulsionnel.

11. Procédé suivant la revendication 10, caractérisé par le fait qu'une coïncidence éventuelle entre les signaux de sortie du générateur de cadence (51,53) est contrôlée.

12. Procédé suivant la revendication 11, caractérisé par le fait que le signal, qui indique l'écart des flancs, est intégré pour former un signal de tension continue.

13. Procédé suivant la revendication 12, caractérisé par le fait que le signal de tension continue est converti en une valeur numérique.

14. Procédé suivant la revendication 13, caractérisé par le fait que la conversion analogique/numérique s'effectue au moyen d'une comparaison simultanée du signal de tension continue à différentes tensions de référence et par conversion du signal de comparaison en une valeur numérique, et que la valeur numérique respective est transférée, respectivement avec le flanc positif d'une impulsion de cadence de transfert, tout d'abord dans un premier registre de mémoire (67) et, par le flanc négatif, ensuite dans un second registre de mémoire (71), que lors de l'apparition du flanc positif de l'impulsion de cadence de transfert immédiatement suivante, la valeur numérique immédiatement suivante est introduite dans le premier registre de mémoire (67) et que les contenus des deux registres de mémoire (67,71) sont alors comparés entre eux pour déterminer un accroissement ou une réduction de l'écart des flancs.

15. Procédé suivant la revendication 12, caractérisé par le fait que pour la détermination d'un accroissement ou d'un écart des flancs, le signal de tension continue, qui représente une valeur de l'écart des flancs, est comparé simultanément à différentes tensions de référence et qu'un signal indiquant un accroissement de l'écart des flancs est produit uniquement lorsque le signal de tension continue dépasse l'une quelconque des tensions de référence.

16. Montage pour la mise en oeuvre du procédé suivant l'une des revendications précédentes, comportant un dispositif d'analyse (37) servant à analyser la distorsion du signal impulsionnel, et un dispositif de commande (29) servant à commander le réseau variable d'égalisation (23), caractérisé par le fait que le dispositif d'analyse (37) comporte un dispositif pour déterminer les variations d'écart des flancs et un dispositif pour déterminer le signe de la variation déterminée d'écart des flancs (accroissement ou réduction) et que le dispositif de commande comporte un compteur binaire (29) commandé de façon cadencée, dont le sens de comptage est commuté dans le cas d'un accroissement de l'écart des flancs déterminé par le dispositif d'analyse (37) et dont les signaux de sortie commandent le raccordement ou le débranchement de parties individuelles (41) du réseau variable d'égalisation (23).

17. Montage suivant la revendication 16, caractérisé par le fait qu'il est prévu comme parties du réseau pouvant être raccordées ou débranchées, des résistances ohmiques (41), les valeurs résistives de deux résistances voisines (41) différant respectivement du facteur 2.

18. Montage suivant la revendication 16 ou 17, caractérisé par le fait qu'il est prévu un dispositif de commutation (33), qui commute le sens de comptage du compteur binaire (29) lorsque l'état de comptage maximal ou minimal du compteur est atteint et moyennant une commande correspondante par le dispositif d'analyse (37).

19. Montage suivant la revendication 18, caractérisé par le fait que le dispositif de commutation (33) comporte un étage à bascule bistable.

20. Montage suivant l'une des revendications 16 à 19, caractérisé par le fait que le dispositif servant à déterminer des variations de l'écart des flancs comporte deux générateurs de cadence ou deux circuits de récupération de la cadence (51,53), synchronisables et branchés en parallèle et en aval desquels est branché un circuit OU-EXCLUSIF (55).

21. Montage suivant l'une des revendication 16 à 20, caractérisé par le fait que le dispositif servant à déterminer le signe de la variation fixée de l'écart des flancs comporte un convertisseur analogique/numérique (61), qui opère selon le procédé en parallèle et dont les sorties sont raccordées aux entrées du premier de deux registres de mémoire (67,71) branchés en série, un inverseur (69), qui inverse l'impulsion de cadence de transfert du premier registre de mémoire (76) avant l'envoi au second registre de mémoire (71), et un comparateur (73) servant à comparer les signaux de sortie des deux registres de mémoire (76,71).

22. Montage suivant l'une des revendications 16 à 20, caractérisé par le fait que le dispositif servant à déterminer le signe de la variation fixée de l'écart des flancs comporte une série de comparateurs (64) branchés en parallèle et qui sont raccordés, côté sortie, respectivement moyennant le montage intercalé d'un condensateur (77), par l'intermédiaire d'une résistance (79) à un potentiel positif et par l'intermédiaire d'un déclencheur de Schmitt inverseur (81) à une entrée d'un circuit combinatoire OU (83), dont la sortie est raccordée à un autre déclencheur de Schmitt (85).

23. Montage suivant l'une des revendications 20 à 22, caractérisé par le fait que le premier circuit de récupération de la cadence (53) comporte un diviseur de fréquence (compteur binaire 93) et un étage à bascule bistable (95), qui peut être positionné par un signal de sortie du diviseur de fréquence (compteur binaire (93), qui est également le signal de sortie (CLK1) de ce circuit de récupération de la cadence (53), et peut être ramené à l'état initial conjointement avec le diviseur de fréquence (compteur binaire 93).

24. Montage suivant l'une des revendications 20 à 23, caractérisé par le fait que l'autre circuit de récupération de cadence (51) comporte un diviseur de fréquence (compteurs binaires 101, 103) servant à délivrer son signal de sortie (CLK2), et un étage à bascule bistable (105), qui peut être positionné par un signal de sortie du diviseur de fréquence (103), signal qui est formé par une division supplémentaire de la fréquence du signal de sortie de ce circuit de récupération de cadence (51), et peut être ramené à zéro conjointement avec le diviseur de fréquence (101,103).

25. Montage suivant la revendication 23 ou 24, caractérisé par le fait que le signal de remise à zéro est produit par une combinaison logique (97,107) des données d'entrée du circuit de récupération de la cadence (53,51) avec un signal de sortie de l'étage à bascule bistable (95,105).

26. Montage suivant l'une des revendications 23 à 25, caractérisé par le fait que les deux circuits de récupération de la cadence (51,53) sont commandés par un générateur commun (91), dont la fréquence de cadence est un multiple entier de la cadence de transmission de données.
